# EUROPÄISCHE PATENTSCHRIFT

(11) **EP 1 641 066 B1**
(45) Veröffentlichungstag und Bekanntmachung des Hinweises auf die Patenterteilung: **25.08.2010**
(21) Anmeldenummer: 05019827.4
(22) Anmeldetag: 13.09.2005
(51) Int. Cl.: H01M 10/44, H01M 10/42, H01M 10/48

(54) **Batterieanlage eines Unterseebootes**
Battery plant of a submarine
Ensemble de batteries d'un sous-marin

(30) Priorität: 22.09.2004 DE 102004045897
(43) Veröffentlichungstag der Anmeldung: 29.03.2006
(73) Patentinhaber: Howaldtswerke-Deutsche Werft GmbH, 24143 Kiel (DE)
(72) Erfinder: Angenendt, Hartmut Dipl.-Ing, 23627 Gross Grönau (DE)
(74) Vertreter: Hemmer, Arnd

(56) Entgegenhaltungen:
- EP-A- 0 434 905
- WO-A-02/15361
- DE-A1- 3 526 045
- DE-A1- 4 014 611
- FR-A1- 2 747 854
- GB-A- 1 590 375
- JP-A- 2002 101 565
- US-A- 5 666 006
- US-A- 5 903 764

## Beschreibung

Die Erfindung betrifft eine Batterieanlage eines Unterseebootes sowie ein Verfahren zum Steuern einer solchen Batterieanlage.

Nicht nuklear angetriebene Unterseeboote weisen üblicherweise eine Batterieanlage auf, welche den außenluftunabhängigen Antrieb des Unterseebootes mit Hilfe von Elektromotoren ermöglicht. In diesen Batterieanlagen werden Bleibatterien eingesetzt, wobei eine Vielzahl von Batterien bzw. Batteriezellen parallel geschaltet werden muss, um die erforderliche Kapazität für einen ausreichend langen außenluftunabhängigen Antrieb bereitstellen zu können. Ferner werden immer so viele Zellen in Reihe geschaltet, dass die erforderliche Bordnetzspannung des Unterseebootes bereitgestellt werden kann. Da beim Laden von Bleibatterien und bei einigen Entladevorgängen relativ hohe Ströme erforderlich sind, müssen zur Verbindung der einzelnen Zellen Stromschienen eingesetzt werden, welche starke unerwünschte elektromagnetische Streufelder aufbauen können. Ferner muss beim Parallelschalten von Bleibatterien darauf geachtet werden, dass der Ladezustand der Batterien möglichst gleich ist, da sonst unerwünschte Ausgleichsströme zwischen den einzelnen Batterien auftreten können.

Hauptnachteil der bekannten Batterieanlagen ist jedoch, dass die gesamte Batteriekapazität mit Rücksicht auf die Höhe möglicher Kurzschlussströme begrenzt ist. Mit zunehmender Batteriekapazität steigt auch die Höhe der möglichen Kurzschlussströme. Entsprechend müssen alle Leitungen und Schalter ausreichend stark dimensioniert werden. Da jedoch die Schaltströme von verfügbaren Schaltern begrenzt sind, ist auch die Gesamtkapazität solcher herkömmlicher Batterieanlagen begrenzt.

WO 02/15361 A1 offenbart eine herkömmliche Fahranlage eines Unterseebootes, bei welcher Batterien wahlweise parallel oder in Reihe geschaltet werden können, um unterschiedliche Spannungen für den Antriebsmotor bereitzustellen. Zur Absicherung sind hier Hochtemperatur-Strombegrenzer vorgesehen. Diese müssen gekühlt werden und verursachen zum einen unerwünschte Geräusche und beanspruchen einen relativ großen Bauraum. Aus diesem Grund ist der Einsatz derartiger Schalter auf einem Unterseeboot nicht optimal.

Es ist daher Aufgabe der Erfindung, eine verbesserte Batterieanlage eines Unterseebootes sowie ein Verfahren zum Steuern einer solchen Batterieanlage bereitzustellen, welche eine höhere Gesamtkapazität der Batterieanlage unter Vermeidung der zuvor genannten Nachteile zulassen.

Diese Aufgabe wird durch eine Batterieanlage eines Unterseebootes mit den in Anspruch 1 angegebenen Merkmalen sowie durch ein Verfahren mit den im Anspruch 12 angegebenen Merkmalen gelöst. Bevorzugte Ausführungsformen ergeben sich aus den zugehörigen Unteransprüchen, der nachfolgenden Beschreibung sowie den Figuren.

Die erfindungsgemäße Batterieanlage eines Unterseebootes weist zumindest zwei Batteriemodule auf. Dabei sind die Batteriemodule so ausgebildet, dass sie jeweils die Bordnetzspannung des Unterseebootes haben. Um dies zu erreichen, können die Batteriemodule aus mehreren in Reihe geschalteten Batteriezellen bestehen, um ein so genanntes Vollspannungsmodul zu bilden, welches die Bordnetzspannung abgibt. Die einzelnen Batteriemodule sind jeweils über einen Schalter mit dem Bordnetz des Unterseebootes verbunden. Die Anordnung eines Schalters zwischen jedem Batteriemodul und dem Bordnetz ermöglicht es, das zugehörige Batteriemodul individuell dem Bordnetz zuzuschalten und wieder von dem Bordnetz zu trennen, d.h. abzuschalten. Diese Anordnung ermöglicht es somit, dass die einzelnen Batteriemodule nach Bedarf dem Bordnetz zugeschaltet werden. So können immer soviel Batteriemodule zugeschaltet werden, dass die gerade im Bordnetz, insbesondere für den Antrieb erforderliche Leistung von der Batterieanlage bereitgestellt werden kann. Die übrigen Batteriemodule können abgeschaltet verbleiben, so dass maximal auftretende Kurzschlussströme verringert werden. Um die Gesamtkapazität der Batterieanlage auszunutzen, können im Wechsel Batteriemodule abgeschaltet und andere zugeschaltet werden, so dass jedes Batteriemodul entladen werden und so die Gesamtkapazität der Batterieanlage ausgenutzt werden kann. Durch die Gliederung der Batterieanlage in mehrere Batteriemodule ist es somit möglich, die Gesamtkapazität der Batterieanlage zu steigern, ohne dass sich mögliche Kurzschlussströme erhöhen.

Ein Batteriemodul kann mehrere parallelgeschaltete Batteriezellen zur Erhöhung der abgebbaren Leistung aufweisen, wobei erfindungsgemäß alle parallelgeschalteten Batteriezellen der Batterieanlage auf mindestens zwei getrennt schaltbare Batteriemodule aufgeteilt sind. Idealerweise werden mehr Batteriemodule vorgesehen, um die Batterieanlage flexibler steuern und dem Leistungsbedarf anpassen zu können.

Es ist eine Steuereinrichtung vorgesehen, welche die Schalter der einzelnen Batteriemodule ansteuert und dabei derartig betätigt, dass maximal nur eine solche Anzahl von Batteriemodulen mit dem Bordnetz verbunden ist, dass ein vorbestimmter maximaler Kurzschlussstrom im Bordnetz nicht überschritten werden kann. Die Steuereinrichtung sorgt dabei dafür, dass alle Batteriemodule bedarfsgemäß dem Bordnetz zu- und wieder abgeschaltet werden, so dass die Gesamtkapazität der Batterieanlage ausgeschöpft werden kann. Dabei wird jedoch von der Steuereinrichtung sichergestellt, dass maximal eine solche Anzahl von Batteriemodulen parallel geschaltet wird, dass ein maximal zulässiger Kurzchlussstrom nicht überschritten wird, um Anlagenteile, wie Leitungen und Schalter nicht zu überlasten.

Bevorzugt sind zumindest zwei Schalter der Batteriemodule so ausgebildet oder steuerbar, dass eine Verriegelung vorgesehen ist, welche bewirkt, dass wenn ein Schalter geschlossen ist, zumindest ein anderer anderer Schalter nicht oder nicht dauerhaft geschlossen werden kann. Die zwei Schalter sind somit so gegeneinander verriegelt, dass immer nur einer dauerhaft geschlossen werden kann. Diese Verriegelung kann durch eine mechanische Kopplung der Schalter erfolgen oder steuerungstechnisch z.B. in einer zentralen Steuereinrichtung realisiert werden, welche so ausgebildet ist, dass die zwei Schalter nicht gleichzeitig geschlossen werden. Für den Fall, dass mehr als zwei Batteriemodule vorgesehen sind, können die Schalter so ausgebildet sein, dass nur eine bestimmte Anzahl von Schaltern gleichzeitig geschlossen werden kann. Auch dies kann mechanisch oder rein steuerungstechnisch in einer zentralen elektronischen Steuereinrichtung realisiert sein. Dabei ist die Anlage vorzugsweise so ausgebildet, dass immer nur eine solche Anzahl von Schaltern geschlossen werden kann, dass maximal so viele Batteriemodule dem Bordnetz zugeschaltet werden, dass ein maximal möglicher Kurzschlussstrom nicht überschritten werden kann. Die Verriegelung kann so ausgebildet sein, dass ein kurzzeitiges Einschalten beider Batteriemodule oder mehrerer Batteriemodule möglich ist; um eine unterbrechungsfreie Stromversorgung auch beim Wechseln bzw. Umschalten der im Einsatz befindlichen Batteriemodule zu gewährleisten.

Dazu ist die Steuereinrichtung vorzugsweise so ausgestattet, dass sie die Schalter derart betätigt, dass beim Abschalten eines Batteriemoduls und gleichzeitigem Zuschalten eines anderen Batteriemoduls zu dem Bordnetz kurzzeitig beide Batteriemodule dem Bordnetz zugeschaltet sind, d.h. dass das eine Batteriemodul erst abgeschaltet wird, wenn das andere Batteriemodul dem Bordnetz bereits zugeschaltet ist. Auf diese Weise wird sichergestellt, dass beim Wechsel bzw. Umschalten der Batteriemodule keine Unterbrechung der Stromversorgung auftritt. Dies kann jedoch bei Verwendung von Bleibatterien problematisch sein, da es aufgrund großer Spannungsunterschiede zwischen geladenen und entladenen Batteriemodulen zu unerwünschten Ausgleichsströmen kommen kann, wenn ein entladenes und ein geladenes Modul gleichzeitig dem Bordnetz zugeschaltet werden.

Dieses Problem wird dadurch vermieden, dass die Steuereinrichtung so ausgebildet ist, dass sie die einzelnen Batteriemodule dem Bordnetz in einem derartigen Wechsel zu- und abschaltet, dass die Batteriemodule gleichmäßig entladen werden. Ein Batteriemodul verbleibt somit nicht so lange am Bordnetz, bis es vollständig entladen ist, sondern wird bereits nach einer vergleichsweise geringen Teilentladung vom Bordnetz getrennt und durch ein weniger stark entladenes Batteriemodul, welches gleichzeitig dem Bordnetz zugeschaltet wird, ersetzt. Dabei ist die Teilentladung der einzelnen Batteriemodule vorzugsweise so gewählt, dass die Spannungsdifferenzen zwischen den einzelnen Batteriemodulen einen vorbestimmten Grenzwert nicht überschreiten, wobei der Grenzwert dadurch bestimmt ist, dass der beim gleichzeitigen Zuschalten der Batteriemodule zwischen diesen auftretende Ausgleichsstrom einen vorgegebenen Wert nicht übersteigt. Das bedeutet, idealerweise werden alle Batteriemodule durch abwechselndes Zu- und Abschalten vom Bordnetz auf im Wesentlichen gleichen Spannungsniveau gehalten, so dass zwischen den einzelnen Batteriemodulen beim gleichzeitigen Zuschalten unerwünschte Ausgleichsströme vermieden werden. D.h. die Ladezustände der einzelnen Batteriemodule werden durch gleichmäßiges abwechselndes Entladen der Batteriemodule auf im Wesentlichen gleichem Niveau gehalten. Dieses Verfahren eignet sich insbesondere für die Verwendung bei Bleibatterien.

Weiter bevorzugt werden in der erfindungsgemäßen Batterieanlage Batteriemodule eingesetzt, welche Lithiumbatterien aufweisen. Dies können beispielsweise LiCoO₂-Batterien mit anorganischem Elektrolyten sein. Derartige Lithiumbatterien haben den Vorteil, dass sich ihre Ausgangsspannung mit Entladung der Batterie nur geringfügig ändert. D.h. die Spannungsunterschiede zwischen vollgeladener und vollentladener die Spannungsunterschiede zwischen vollgeladener und vollentladener Batterie sind bei Lithiumbatterien deutlich geringer als bei Bleibatterien. Aufgrund dessen ist es mit Lithiumbatterien leichter möglich, die Batteriemodule beim Zuschalten eines vollgeladenen Batteriemoduls zum Bordnetz und gleichzeitigem Abschalten eines entladenen Batteriemoduls kurzzeitig parallelzuschalten, ohne dass unerwünschte Ausgleichsströme auftreten. Ferner müssen die Verbraucher nicht mehr für die großen Spannungsunterschiede im Bordnetz ausgelegt werden.

Die Verwendung von Lithiumbatterien hat gegenüber bekannten Bleibatterien ferner den Vorteil, dass die Lithiumbatterien wartungsfrei sind. So kann auf die sonst erforderlichen Wartungsräume, welche den Zugang zu den Bleibatterien ermöglichen, vollständig verzichtet werden. Ferner kann auch auf den von Bleibatterien bekannten Destillatvorrat sowie die beim Umgang mit Destillat notwendige Nassbilge im Batterieraum verzichtet werden. Des Weiteren kann auf notwendige Belüftungen und Maßnahmen für den Explosionsschutz verzichtet werden, da Lithium-basierte Batterien keine zündfähigen Gase freisetzen. Die Lüftungsanlage kann so ausgelegt werden, wie es für unbesetzte Räume gefordert ist. Auch die Beleuchtung der Batterieräume kann minimiert werden, da Inspektionen nur noch während Hafen- und Werftliegezeiten stattfinden müssen. Auch eine Säureumwälzung, wie sie bei den Einzelzellen der Bleibatterien üblich ist, ist entbehrlich.

Weiter bevorzugt ist jedes Batteriemodul über eine zusätzliche Ladeleitung mit einer Ladeeinrichtung des Unterseebootes verbunden. Diese Anordnung hat zum einen den Vorteil, dass sämtliche Batteriemodule unabhängig voneinander geladen werden können. Dazu können entsprechende Schalter vorgesehen sein. Zum anderen hat diese Anordnung den Vorteil, dass die Batteriemodule getrennte Verbindungsleitungen zum Bordnetz für den Entladevorgang und Ladeleitungen zum Aufladen der Batteriemodule aufweisen. Dies ermöglicht, beim Entladen die Batteriemodule einzeln dem Bordnetz zuzuschalten, um den maximalen Kurzschlussstrom begrenzen zu können. Aufgrund der separaten Ladeleitungen ist es dann aber möglich, zum Aufladen der Batteriemodule mehrere Batteriemodule oder alle Batteriemodule parallel zu schalten. Die einzelnen Ladeleitungen haben den Vorteil, dass sie nur den Ladestrom für ein einzelnes Batteriemodul übertragen müssen, so dass die Ladeleitungen gegenüber den von bekannten Bleibatterien bekannten Anschlussleitungen für geringere Ströme dimensioniert werden können. Die geringeren Ströme führen darüber hinaus zu geringeren elektromagnetischen Streufeldern. Die Ladeleitungen sind vorzugsweise einpolig ausgebildet, der andere Pol der Ladeeinrichtung, beispielsweise eines Generators wird in üblicher Weise mit dem Bordnetz und den für die Entladung der Batteriemodule vorgesehenen Anschlussleitungen verbunden.

Vorzugsweise sind die Anschlussleitungen,. über welche die Batteriemodule mit dem Bordnetz verbunden sind, so ausgebildet, dass jedes Batteriemodul über eine separate Anschlussleitung mit dem Bordnetz verbunden ist; über welche das Batteriemodul entladen werden kann. Diese Anordnung hat den Vorteil, dass die einzelnen Anschlussleitungen der Batteriemodule jeweils nur die Leistung des einzelnen Batteriemoduls übertragen müssen, so dass sie für geringere Ströme als die bekannten Stromschienen ausgelegt werden können. So können die Anschlussleitungen und ggfs. auch die Ladeleitung als mehradrige bzw. mehrpolige Kabel ausgebildet werden, wodurch elektromagnetische Streufelder vermieden werden.

Weiter bevorzugt ist in der Ladeleitung jedes Batteriemoduls eine Diode angeordnet. Die Dioden in den Ladeleitungen sind so angeordnet, dass ein Strom in der Ladeleitung nur von der Ladeeinrichtung, beispielsweise einem Generator in das Batteriemodul fließen kann. Dadurch wird eine Rückspeisung anderer Batteriemodule über die Ladeleitungen ausausgeschlossen und es wird kein Beitrag zum Kurzschlussstrom geleistet. Die Dioden sind vorzugsweise direkt an oder in den Batteriemodulen angeordnet.

Gemäß einer besonders bevorzugten Ausführungsform ist jedes Batteriemodul über einen Halbleiterschalter schaltbar mit der Ladeleitung verbunden. Ein solcher Halbleiterschalter kann elektronisch, beispielsweise von einer zentralen Steuereinrichtung, betätigt werden, um so den Ladevorgang jedes Batteriemoduls individuell starten und beenden zu können. Alternativ kann auch ein Schalter vorgesehen sein, welcher manuell betätigt wird, dies kann ein mechanischer Schalter oder ein elektronischer oder elektrisch betätigter Schalter sein. Halbleiterschalter bieten den Vorteil, dass gesonderte Dioden entbehrlich sind. Als Halbleiterschalter kann beispielsweise ein Schalter; weicher nach Art eines Thyristors oder ein Schalter, welcher nach Art eines Transistors arbeitet, verwendet werden. Der thyristorartige Halbleiterschalter ist dabei beispielsweise so ausgebildet, dass er durch einen kurzen Schaltimpuls geöffnet wird und so lange offen bleibt; wie ein Ladestrom fließt.

Weiter bevorzugt weist jedes Batteriemodul eine Modulelektronik auf, welche zumindest eine Kenngröße des zugehörigen Batteriemoduls erfasst. Von der Modulelektronik zu erfassende Kenngrößen können beispielsweise Strom, Leerlaufspannung und/oder Temperaturen oder ähnliches sein. Die erfassten Kenngrößen werden entweder direkt in der Modulelektronik selber ausgewertet und weiterverarbeitet und/oder über eine entsprechende Schnittstelle und Datenleitung an eine übergeordnete Anlage wie eine zentrale Steuerelektronik übergeben, welche beispielsweise den Lade- und Entladezyklus aller Batteriemodule steuert. Alternativ oder zusätzlich kann die Modulelektronik im Batteriemodul selber den Lade- und/oder Entladezyklus des jeweiligen Batteriemoduls steuern.

Dazu ist die Modulelektronik vorzugsweise derart ausgebildet, dass sie den Halbleiterschalter in Abhängigkeit der erfassten Kenngröße und mehrerer erfassten Kenngrößen ein- und/oder ausschaltet, um das Batteriemodul mit der Ladeleitung elektrisch zu verbinden und von dieser zu trennen. Das bedeutet, die Modulelektronik erkennt aufgrund der aktuell erfassten Kenngrößen, beispielsweise Strom- und Leerlaufspannung, den Ladezustand des jeweiligen Batteriemoduls und veranlasst selbsttätig das Wiederaufladen des zugehörigen Batteriemoduls, indem sie das Batteriemodul elektrisch mit der Ladeleitung verbindet. Entsprechend kann die Modulelektronik so ausgebildet sein, dass sie bei Erreichen des vollen Ladezustandes des zugehörigen Batteriemoduls den Halbleiterschalter öffnet, um das Batteriemodul von der Ladeleitung elektrisch zu trennen. Dabei ist auch eine Ausführungsform denkbar, bei welcher der Beginn des Ladezyklus, d.h. das Schließen der Halbleiterschalter der einzelnen Batteriemodule zentral durch manuelle Betätigung oder durch eine zentrale Steuereinrichtung gestartet wird und lediglich das Beenden des Ladevorganges für jedes Batteriemodul individuell durch die jeweilige Modulelektronik veranlasst wird.

Alternativ kann gemäß einer weiteren Ausführungsform der Erfindung die Batterieanlage so ausgebildet sein, dass die Betätigung des Halbleiterschalters zum Trennen des Batteriemoduls von der Ladeleitung durch einen Schaltbefehl einer zentralen Steuereinrichtung der Batterieanlage oder durch Änderung oder Unterbrechung des Ladestroms von der Ladeeinrichtung erfolgt. Dabei kann die Änderung, beispielsweise eine Verringerung, oder Unterbrechung des Ladestromes ebenfalls durch eine zentrale Steuereinrichtung oder manuell veranlasst werden. Zum gezielten Verbinden und Trennen des Batteriemoduls von der Ladeleitung durch einen Schaltbefehl von einer zentralen Steuereinrichtung oder der Modulelektronik des jeweiligen Batteriemoduls eignet sich insbesondere ein transistorartiger Halbleiterschalter.

Bei Verwendung eines thyristorartigen Halbleiterschalters kann der Ladevorgang dadurch gestartet werden, dass der Halbleiterschalter durch einen Schaltimpuls von der Modulelektronik oder einer zentralen Steuerelektronik geschlossen wird. Beispielsweise kann die Modulelektronik erkennen, dass ein Ladezyklus der Batterieanlage gestartet wurde, indem erfasst wird, ob an der Ladeleitung eine Ladespannung anliegt. Falls ein Aufladen des zugehörigen Batteriemoduls erforderlich ist, kann die Modulelektronik oder eine zentrale Steuereinrichtung dann das entsprechende Batteriemodul mit der Ladeleitung durch Betätigung des Halbleiterschalters verbinden. Der Halbleiterschalter bleibt dann so lange geschlossen, wie ein Ladestrom fließt. Um den Ladevorgang zu beenden, kann der Ladestrom unterbrochen werden, wodurch der thyristorartige Halbleiterschalter geöffnet und das zugehörige Batteriemodul von der Ladeleitung getrennt wird. Um auf diese Weise den Ladevorgang automatisiert steuern zu können, ist es beispielsweise möglich, den Ladestrom in vorgegebenen Intervallen kurzzeitig zu unterbrechen, wodurch sämtliche Halbleiterschalter der einzelnen Batteriemodule geöffnet werden. Nach Abschluss der Unterbrechung des Ladestroms schalten dann jeweils die Modulelektroniken der Batteriemodule oder eine zentrale Steuereinrichtung nur diejenigen Battehemodule wieder auf die Ladeleitung auf, welche noch nicht vollständig geladen sind.

Die Batterieanlage weist vorzugsweise ferner einen zusätzlichen Notschalter zum Verbinden jedes Batteriemoduls mit der Ladeleitung auf. Ein solcher Notschalter kann manuell betätigt werden, in dem Fall, dass die Steuer- bzw. Modulelektronik und/oder ein Halbleiterschalter ausfallen sollten. Dazu kann beispielsweise ein rein mechanischer Schalter vorgesehen sein, welcher dann geschlossen werden kann, um das jeweilige Batteriemodul durch manuelle Betätigung laden zu können. Es ist auch möglich, einen Notschalter zwischen einer zentralen Ladeleitung und der Entladeleitung vorzusehen, so dass durch Schließen dieses Schalters die Batteriemodule notfalls über die Entladeleitungen geladen werden können.

Die Erfindung betrifft ferner ein Verfahren zum Steuern einer Batterieanlage eines Unterseebootes gemäß der vorangehenden Beschreibung. Die zu steuernde Batterieanlage weist zumindest zwei, vorzugsweise eine Vielzahl von Batteriemodulen auf. Die Batteriemodule haben jeweils die Bordnetzspannung des Unterseebootes. Je nach Art der verwendeten Batterien können dazu mehrere Zellen in Reihe geschaltet sein, um die erforderliche Spannung bereitzustellen. Ferner kann das Batteriemodul auch mehrere parallel geschaltete Batteriezellen aufweisen, um eine bestimmte Leistungsabgabe bzw. Kapazität des Batteriemoduls zu erreichen.

Die Steuerung dieser Batterieanlage erfolgt erfindungsgemäß in der Weise, dass zum Entladen der Batteriemodule, d.h. zur Energieversorgung des Unterseebootes und insbesondere dessen Antriebes, abwechselnd immer nur eine bestimmte Anzahl von Batteriemodulen dem Bordnetz zugeschaltet wird. Das bedeutet, dass nicht alle Batteriemodule gleichzeitig mit dem Bordnetz verbunden sind, um dieses mit Energie zu versorgen. Die Energieversorgung erfolgt aktuell immer nur durch eine begrenzte Anzahl von Batteriemodulen. Dabei wird die Anzahl der gleichzeitig mit dem Bordnetz verbundenen Batteriemodule so gewählt, dass das Batteriemodul oder die Batteriemodule, welche gleichzeitig mit dem Bordnetz verbunden sind, nur eine solche maximale Leistung abgeben können, dass ein vorbestimmter maximaler Kurzschlussstrom im Bordnetz nicht überschritten werden kann. Somit kann durch das erfindungsgemäße Verfahren und die Aufteilung der Batterieanlage in zumindest zwei getrennt dem Bordnetz zuschaltbare Batteriemodule eine Begrenzung des maximalen Kurzschlussstromes erreicht werden. Dies ermöglicht, die Leitungen, Anlagen, Schalter etc. im Bordnetz für entsprechend geringere Ströme zu dimensionieren. Gleichzeitig ist es problemlos möglich, eine Batterieanlage mit größerer Gesamtkapazität ohne Erhöhung des maximalen Kurzschlussstromes aufzubauen.

Die Batteriemodule werden derart abwechselnd dem Bordnetz zugeschaltet und entladen, dass eine gleichmäßige Entladung aller Batteriemodule erreicht wird. D.h. die Zu- und Abschaltung der einzelnen Batteriemodule wird so gesteuert, dass ein Batteriemodul nicht zunächst vollständig entladen wird, bevor ein nächstes, noch nicht entladenes Batteriemodul zugeschaltet wird. Stattdessen findet jeweils nur eine geringe Entladung des Batteriemoduls statt, dann wird auf ein nächstes Batteriemodul umgeschaltet, welches weniger weit entladen ist. Dabei werden die einzelnen Batteriemodule derart abwechselnd zugeschaltet, dass die Spannungsunterschiede zwischen den einzelnen Batteriemodulen aufgrund unterschiedlicher Ladung einen bestimmten Grenzwert nicht überschreiten. Dieser Grenzwert ist so gewählt, dass bei gleichzeitiger Verbindung der Batteriemodule mit dem Bordnetz keine oder nur geringe Ausgleichsströme fließen. Dieses Verfahren eignet sich somit insbesondere für den Einsatz von Bleibatterien.

Weiter bevorzugt werden alle Batteriemodule gleichzeitig geladen. Dies ist sinnvoll, um die gesamte Batterieanlage möglichst schnell wieder aufladen zu können und so den außenluftabhängigen Betrieb des Unterseebootes möglichst kurz halten zu können. Besonders günstig lassen sich Lithiumbatterien gemeinsam wieder aufladen, da diese nur einen geringen Spannungshub zwischen geladenem und entladenem Zustand aufweisen, so dass es bei Parallelschaltung unterschiedlich geladener Batteriemodule nicht zu unerwünschten Ausgleichsströmen aufgrund von Spannungsunterschieden kommen kann.

Besonders bevorzugt wird der Ladezustand jedes einzelnen Batteriemoduls überwacht und der Ladevorgang der einzelnen Batteriemodule jeweils unabhängig von den anderen Batteriemodulen gestartet jeweils unabhängig von den anderen Batteriemodulen gestartet und/oder beendet. Auf diese Weise können sehr kurze Ladezeiten erreicht werden, da der Ladevorgang jedes einzelnen Batteriemoduls optimal an den jeweiligen Ladezustand des Batteriemoduls angepasst werden kann. Ferner kann durch rechtzeitiges Abschalten der vollständig geladenen Batteriemodule von der Ladeleitung ein Überladen der Batteriemodule verhindert werden. Starten und/oder Beenden des Ladevorganges eines einzelnen Batteriemoduls kann manuell oder automatisch durch eine zentrale Steuereinrichtung oder eine lokale Modulelektronik im einzelnen Batteriemodul erfolgen.

Gemäß einer speziellen Ausführungsform des Verfahrens sind die einzelnen Batteriemodule jeweils über einen Schalter, vorzugsweise einen Halbleiterschalter mit einer Ladeleitung verbunden und werden die Schalter zum Starten des Ladevorganges jeweils geschlossen, um das zugehörige Batteriemodul mit der Ladeleitung elektrisch zu verbinden, wobei nach Erreichen der vollständigen Ladung eines Batteriemoduls der zugehörige Schalter gegen ein Wiedereinschalten blockiert wird. Ein solcher Schalter kann beispielsweise als Halbleiterschalter mit Funktion nach Art eines Thyristors ausgebildet sein. Das Schließen der Halbleiterschalter kann zentral manuell oder über eine zentrale Steuereinrichtung oder aber auch lokal durch eine Modulelektronik des zugehörigen Batteriemoduls erfolgen. Das Einschalten kann beispielsweise von der lokalen Modulelektronik automatisch veranlasst werden, sobald an der Ladeleitung eine von einer Ladeeinrichtung erzeugte Ladespannung anliegt. Der Schalter kann dann selbsthaltend nach Art eines Thyristors ausgestaltet sein, d.h. er bleibt so lange geschlossen, wie ein Ladestrom fließt. Zum Beenden des Ladevorganges wird der Ladestrom dann abgeschaltet oder unterbrochen. Die Blockierung der Schalter der vollständig geladenen Batteriemodule bewirkt dann, dass beim Wiedereinschalten des Ladestroms nur diejenigen Batteriemodule automatisch mit der Ladeleitung verbunden werden, welche noch nicht vollständig geladen sind. Wenn gemäß diesem Verfahren der Ladestrom in regelmäßigen Abständen kurzzeitig unterbrochen bzw. abgeschaltet wird, kann durch die individuelle Auf- und Abschaltung der einzelnen Batteriemodule auf die Ladeleitungen eine vollständige Ladung der gesamten Batterieanlage erreicht werden, wobei jedes Batteriemodul individuell entsprechend seinem jeweiligen Ladungszustand geladen wird, so dass ein Überladen einzelner Batteriemodule verhindert wird.

Nachfolgend wird die Erfindung beispielhaft anhand der beigefügten Figuren beschrieben. In diesen zeigt:
- Fig. 1: schematisch den Aufbau einer Batterieanlage gemäß einer ersten Ausführungsform der Erfindung,
- Fig. 2: schematisch den Aufbau einer Batterieanlage gemäß einer zweiten Ausführungsform der Erfindung und
- Fig. 3: schematisch den Aufbau der Modulelektronik eines Batteriemoduls gemäß der Batterieanlage, welche in Fig. 2 dargestellt ist.

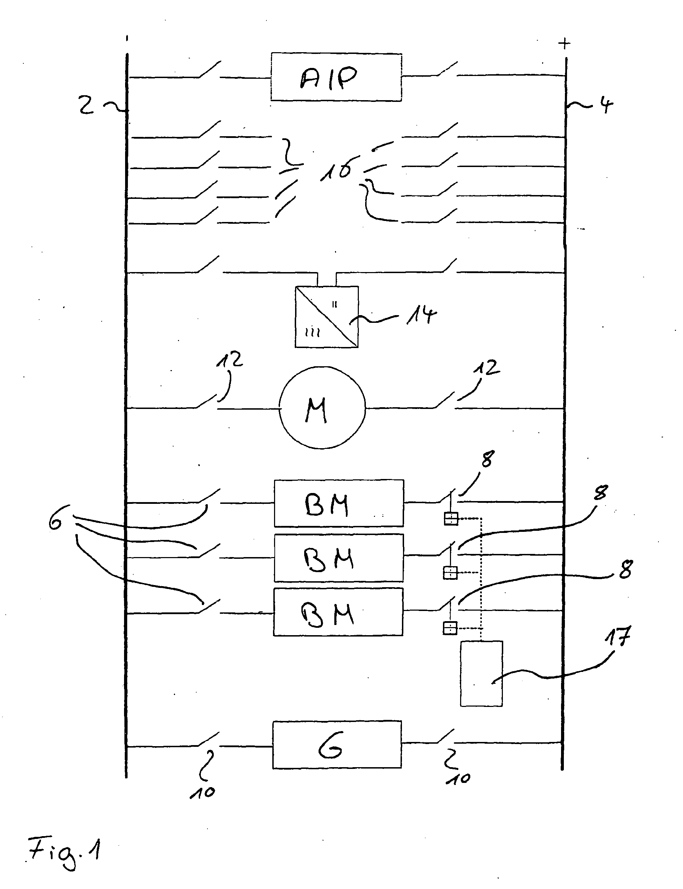

Fig. 1 zeigt einen schematischen Schaltplan des Bordnetzes des Unterseebootes. An den zwei Leitern des Bordnetzes sind im Wesentlichen sämtliche Teile der Batterieanlage sowie elektrischen Verbraucher und weitere Aggregate zur Energieversorgung angeschlossen. D.h. die Leiter 2 und 4 verbinden die Verbraucher und unterschiedliche Stromquellen. Die gezeigte Batterieanlage weist drei Batteriemodule BM auf, jedoch kann die Batterieanlage auch mehr als drei oder lediglich zwei Batteriemodule BM aufweisen. Die Batteriemodule BM fassen ggfs. jeweils mehrere Batteriezellen zusammen, welche in Reihe geschaltet sind, um die gewünschte Bordnetzspannung zwischen den Leitern 2 und 4 abzugeben. Alternativ oder zusätzlich können mehrere Zellen innerhalb eines Batteriemoduls BM parallel geschaltet sein, um die Leistung bzw. Kapazität des Batteriemoduls BM zu erhöhen. Jedes Batteriemodul BM weist an jedem seiner Anschlusspole einen Schalter 6 bzw. 8 auf, über welche das Batteriemodul mit den Leitern 2 und 4 verbunden ist. Der Schalter 6 wird nur zu Wartungszwecken geöffnet.

Ferner weist die in Fig. 1 gezeigte Anlage als weiteren wesentlichen Bestandteil einen Generator G auf, welcher ebenfalls über Schalter 10 mit den Leitern 2 und 4 verbunden ist. Der Generator G ist vorzugsweise als Dieselgenerator ausgebildet, welcher von der Dieselmaschine des Unterseebootes angetrieben wird.

Ferner ist an das in Fig. 1 gezeigte Bordnetz eines Unterseebootes ein Motor M angeschlossen, welcher ebenfalls über Schalter 12 mit den Leitern 2 und 4 verbunden ist. Zusätzlich kann zwischen Motor und Bordnetr ein entsprechender Regler zur Regelung bzw. Steuerung des Motors vorgesehen sein. Der Motor dient als Antriebsmotor, um den Bootspropeller anzutreiben.

Ferner ist in Fig. 1 ein an die Leiter 2 und 4 angeschlossener Bordnetzumformer 14 gezeigt, welcher dazu dient, den von den Leitern 2 und 4 gelieferten Gleichstrom in Wechselstrom umzuwandeln für elektrische Verbraucher, welche zwingend mit Wechselstrom betrieben werden müssen. An den Leitungen 16 können weitere Gleichstromverbraucher ggfs. schaltbar mit den Leitern 2 und 4 verbunden werden. In dem in Fig. 1 gezeigten Beispiel ist ferner eine AIP-Anlage (Air Independent Propulsion) eingezeichnet, was beispielsweise eine Brennstoffzellenanlage sein kann, welche das Bordnetz ebenfalls mit elektrischer Energie versorgen kann.

Die erfindungsgemäße Anordnung von unabhängigen Batteriemodulen BM hat den Vorteil, dass eine erhöhte Gesamtkapazität der Batterieanlage bereitgestellt werden kann, ohne den möglichen Kurzschlussstrom zwischen Leitern 2 und 4 zu erhöhen. Über die Schalter 6 und/oder 8 werden die einzelnen Batteriemodule BM je nach Bedarf mit den Leitern 2 und 4 und damit dem Bordnetz des Unterseebootes verbunden. Dabei werden so viele Batteriemodule BM mit dem Bordnetz verbunden, wie erforderlich sind, um die für den Betrieb der angeschlossenen Verbraucher erforderlichen Leistung bereitzustellen. Die nicht benötigen Batteriemodule BM bleiben vom Bordnetz, d.h. den Leitern 2 und 4 getrennt, indem die Schalter 6 und/oder 8 geöffnet werden. Wenn ein Batteriemodul BM entladen ist, wird es durch Öffnen der Schalter 6 und/oder 8 vom Bordnetz getrennt und ein anderes Modul BM wird durch Schließen der zugehörige Schalter 6, 8 dem Bordnetz, d.h. den Leitern 2 und 4 zugeschaltet. Anstatt ein Batteriemodul BM zunächst vollständig zu entladen, können sämtliche Batteriemodule BM im vorzugsweise gleichmäßigen Wechsel betrieben werden, so dass die einzelnen Batteriemodule BM jeweils nur für eine bestimmte Zeit mit den Leitern 2, 4 verbunden sind und entladen werden. Dabei wird das einzelne Batteriemodul BM schon nach einer vergleichsweisen, kurzen Entladezeit vom Bordnetz getrennt und ein anderes Batteriemodul, welches weniger entladen ist, zugeschaltet. Auf diese Weise können alle Batteriemodule gleichmäßig entladen werden. Dabei wird jedes Batteriemodul zunächst nur so weit entladen, dass die Ladungs- und damit Spannungsdifferenz zwischen den unterschiedlich geladenen Batteriemodulen einen vorbestimmten Wert nicht übersteigt, so dass keine unerwünschten Ausgleichsströme zwischen den einzelnen Batteriemodulen, auftreten können. Dies ist insbesondere bei Bleibatterien wichtig.

Bei der in Fig. 1 dargestellten Anlage ist an den Schaltern 8 zusätzlich ein Verriegelungssystem 17 vorgesehen, welches dafür sorgt, dass, wenn ein Batteriemodul mit den Leitern 2 und 4 verbunden ist, die anderen beiden gezeigten Batteriemodule BM nicht mit den Leitern 2 und 4 verbunden werden können. Dazu werden die Schalter 8 der beiden anderen Batteriemodule BM durch das Verriegelungssystem 17 blockiert, so dass die Schalter 8 nicht geschlossen werden können. Dies Verriegelungssystem kann elektrisch oder mechanisch ausgebildet sein. Ferner kann das Verriegelungssystem für den Fall, dass eine größere Anzahl von Batteriemodulen BM vorgesehen ist, so ausgebildet sein, dass mehr als ein Batteriemodul gleichzeitig mit dem Bordnetz verbunden werden kann. So kann das Verriegelungssystem 17 beispielsweise so ausgebildet sein, dass immer zwei Batteriemodule BM gleichzeitig mit dem Bordnetz verbunden werden können, während die anderen Batteriemodule BM vom Bordnetz getrennt bleiben und deren Schalter 8 in der Stellung "offen" verriegelt sind.

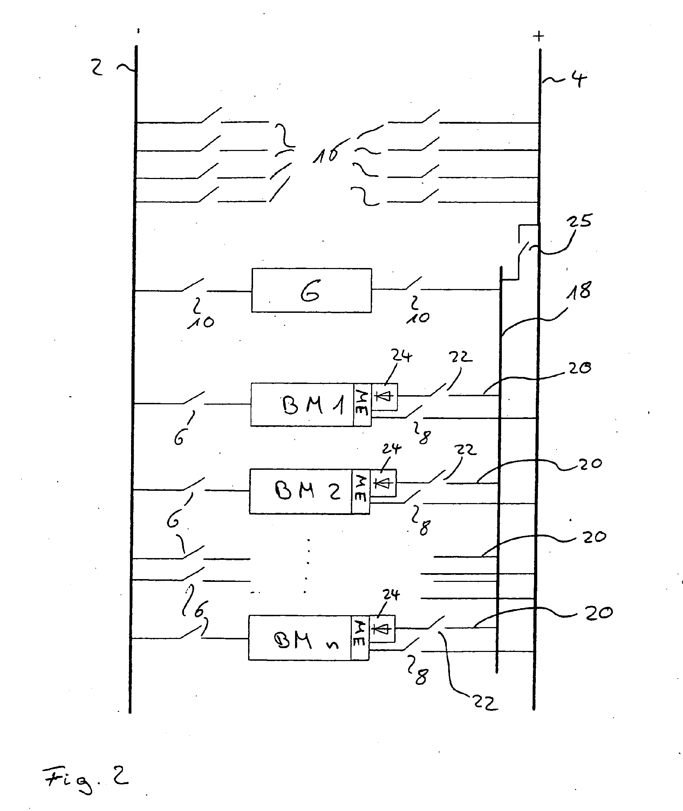

Fig. 2 zeigt in einem entsprechenden schematischen Schaltplan eine weitere Ausführungsform der erfindungsgemäßen Batterieanlage. Die Gesamtanlage gemäß Fig. 2 weist wie oben beschrieben zwei Leiter 2, 4 auf. Entsprechend sind ebenfalls ein Motor M, ein Generator G, ein Bordnetzumformer 14 und weitere Verbraucher an den Anschlüssen 16 vorgesehen. Ferner sind ebenfalls entsprechend mehrere Batteriemodule BM vorgesehen, wobei, wie in Fig. 2 angedeutet, eine Vielzahl von Batteriemodulen BM 1, BM 2 ... BMₙ vorgesehen ist. Wie anhand von Fig. 1 beschrieben, sind die Batteriemodule über Schalter 6 und 8 mit den Leitern 2 und 4 verbunden.

Im Unterschied zu der Ausführungsform gemäß Fig. 1 ist bei der Anlage gemäß Fig. 2 eine separate Ladeleitung bzw. Ladeschiene 18 vorgesehen, welche beim Laden der Batteriemodule BM den Pluspol bildet. Der Negativpol wird auch beim Ladevorgang durch den Leiter 2 gebildet. Der Generator G ist über die Schalter 10 mit dem Leiter 2 und der Ladeschiene 18 verbunden. Die Batteriemodule BM 1 bis BMₙ sind jeweils über eine Ladeleitung 20 und einen Schalter 22 mit der Ladeschiene 18 verbunden. Zusätzlich ist in jeder Ladeleitung 20 an dem zugehörigen Batteriemodul BM eine Diode 24 vorgesehen, welche eine Rückspeisung aus dem zugehörigen Batteriemodul in die Ladeschiene 18 verhindert, d.h. der Strom kann nur von der Ladeschiene 18 über die Ladeleitung 20 zu dem Batteriemodul BM, aber nicht zurückfließen.

Die Anordnung der separaten Ladeschiene 18 mit den separaten Ladeleitungen 20 zu dem jedem Batteriemodul BM ermöglicht es, durch Schließen der Schalter 22 zum Laden eine größere Anzahl bis hin zur Gesamtzahl der Batteriemodule über den Leiter 2 sowie die Ladeschiene 18 parallel zu schalten. Zum Entladen werden für diejenigen Batteriemodule, welche mit dem Leiter bzw. der Entladeschiene 4 sowie dem Leiter 2 verbunden werden sollen, die Schalter 8 geschlossen. Dies ermöglicht parallel zum Ladebetrieb, die Anzahl der Batteriemodule BM auf die Entladeleitung zu schalten; die für den Bordbetrieb benötigt werden.

Die Schalter 22 werden entweder von einer individuellen Modulelektronik ME in jedem Batteriemodut oder von einer zentralen Steuereinrichtung betätigt, um den Ladevorgang jedes Batteriemoduls individuell zu steuern. So kann über die Modulelektronik ME der Ladezustand des jeweiligen Batteriemoduls erfasst werden und das Batteriemodul durch Öffnen des Schalters 22 von der Ladeschiene 18 getrennt werden, wenn das jeweilige Batteriemodul BM vollständig geladen ist. Auf diese Weise kann ein Überladen verhindert werden. Entsprechend können zum Ladebeginn nur diejenigen Batteriemodule BM mit der Ladeschiene 18 verbunden werden, welche entladen sind. Noch nicht entladene Batteriemodule werden dann gar nicht erst mit der Ladeschiene 18 verbunden.

Die Modulelektronik ME kann zum einen reine Auswertfunktionen übernehmen, so dass beispielsweise die Batteriespannung, der Entladestrom und/oder die Batterietemperatur erfasst werden und über eine entsprechende Schnittstelle oder Datenleitung an eine zentrale Steuerelektronik übergeben werden. Alternativ oder zusätzlich kann die Modulelektronik ME den Ladevorgang des zugehörigen Batteriemoduls BM individuell steuern und den Schalter 22 und/oder die Diode 24, sofern es sich um eine schaltbare Diode handelt, ansteuern.

Zusätzlich ist ein Notschalter 25 vorgesehen, welcher als mechanischer Schalter ausgebildet sein kann und über den die Ladeschiene 18 manuell mit der Entladeschiene 4 verbunden werden kann. Dies ermöglicht in dem Fall, dass die Modulelektronik ME oder die Schalter 22 bzw. die Diode 24 ausfallen sollten, die Batteriemodule BM über die Ladeschiene bzw. den Leiter 4 mit dem Pluspol des Generators G zu verbinden und über den Leiter 4 und die Schalter 8 zu laden. Alternativ kann auch für jedes Batteriemodul BM 1 bis BMₙ ein Notschalter vorgesehen sein, welcher die Diode 24 und/oder den Schalter 22 überbrückt, um das jeweilige Batteriemodul BM bei Ausfall der Modulelektronik oder des Schalters 22 direkt mit der Ladeschiene 18 verbinden zu können.

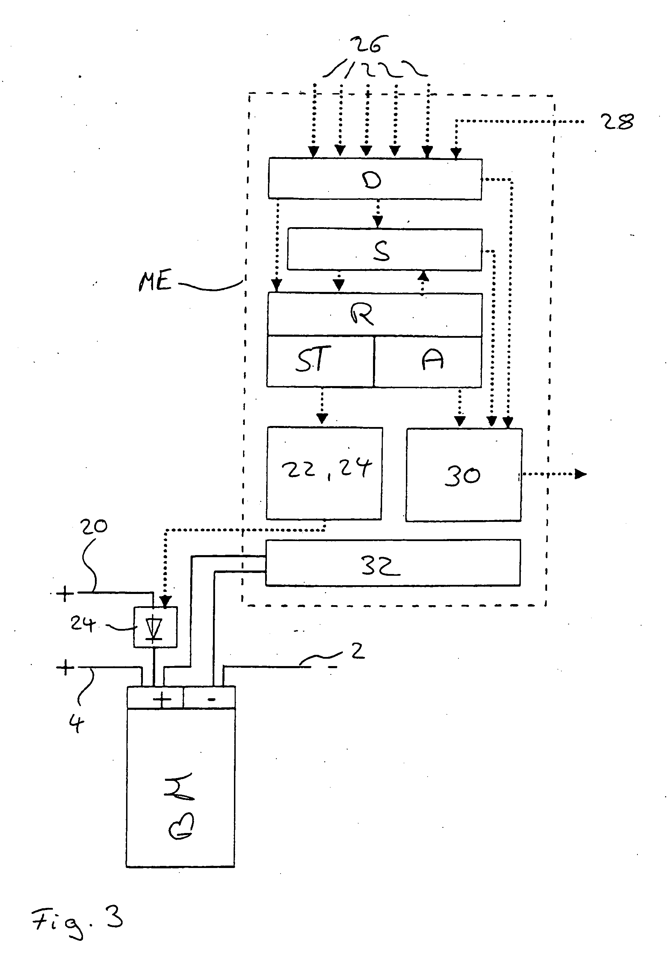

Ein Beispiel für den Aufbau der Modulelektronik ME ist schematisch in Fig. 3 gezeigt. Die Modulelektronik ME weist eine Datenerfassungseinrichtung auf, welche zum einen Moduldaten 26, wie Spannungen, Ströme, Temperaturen, etc. erfasst, und zum anderen Daten 28 von einer übergeordneten Automation, beispielsweise einer zentralen Steuerelektronik erfasst. Die in der Datenerfassung D erfassten Daten werden zum einen an eine Rechnerbaugruppe R sowie zum anderen an eine Speicherbaugruppe S übergeben. Die Speicherbaugruppe S kommuniziert darüber hinaus mit der Rechnerbaugruppe, um Daten, beispielsweise Kenngrößen über den Lade- oder Entladeverlauf des zugehörigen Batteriemoduls BM zu speichern. Die Rechnerbaugruppe R erzeugt ein Steuersignal ST, welches an den Schalter 22 oder die Diode 24 weitergegeben wird. Der Schalter 22 kann als Halbleiterschalter ausgebildet sein. Alternativ oder zusätzlich kann eine schaltbare Diode 24 vorgesehen sein, um das Batteriemodul von der zugehörigen Ladeleitung 20 und damit der Ladeschiene 18 elektrisch zu trennen oder es mit diesen elektrisch zu verbinden. Gemäß der in Fig. 3 gezeigten Modulelektronik ME ist somit die Rechnerbaugruppe R dafür verantwortlich, je nach Ladezustand des zugehörigen Batteriemoduls BM dieses mit der Ladeschiene 18 zu verbinden und von dieser wieder zu trennen. Der generelle Beginn eines Ladezyklus, d.h. dass beispielsweise das Unterseeboot aufgetaucht fährt und der dieselgetriebene Generator G läuft, kann der Modulelektronik beispielsweise über die Daten 28 von einer übergeordneten Automation mitgeteilt werden. Alternativ kann die Modulelektronik ME auch die Ladeschiene 18 überwachen und, sobald dort eine Ladespannung anliegt, den Ladevorgang für das zugehörige Batteriemodul BM aktivieren, sofern das Batteriemodul geladen werden muss, was über die Moduldaten 26 festgestellt werden kann.

Ferner ist die Rechnerbaugruppe R dazu vorgesehen, ein Alarmsignal A bei etwaigen Störungen des Batteriemoduls BM zu generieren, welches einem Datenausgang 30 zugeführt wird. Ebenfalls können dem Datenausgang Daten aus Datenerfassung D sowie der Speicherbaugruppe S zugeleitet werden und über den Datenausgang beispielsweise an eine übergeordnete Automation wie eine zentrale Steuereinrichtung oder auch an die Modulelektronik ME anderer Batteriemodule BM übergeben werden, um etwaige Fehler anzuzeigen und/oder automatisch darauf zu reagieren.

Des Weiteren weist die Modulelektronik ME noch eine Spannungsversorgung 32 auf, welche von dem zugehörigen Batteriemodul BM selber mit der notwendigen elektrischen Energie versorgt wird.

### Bezugszeichenlisten

- 2, 4: - Leiter
- 6, 8, 10, 12: - Schalter
- 14: - Bordnetzumformer
- 16: - Anschlüsse für Gleichstrom-Verbraucher
- 17: - Verriegelungssystem
- 18: - Ladeschiene
- 20: - Ladeleitung
- 22: - Schalter
- 24: - Diode
- 25: - Notschalter
- 26: - Moduldaten
- 28: - Daten
- 30: - Datenausgang
- 32: - Spannungsversorgung

- BM: - Batteriemodul
- M: - Motor
- G: - Generator
- AIP: - Außenluftunabhängige Energieversorgung
- ME: - Modulelektronik
- D: - Datenerfassung
- S: - Speicherbaugruppe
- R: - Rechnerbaugruppe
- ST: - Steuersignal
- A: - Alarmsignal

## Patentansprüche

1. Batterieanlage eines Unterseebootes mit zumindest zwei Batteriemodulen (BM), welche jeweils die Bordnetzspannung des Unterseebootes haben, und jeweils über einen Schalter (8) mit dem Bordnetz des Unterseebootes verbunden sind, welcher es ermöglicht, das zugehörige Batteriemodul (BM) dem Bordnetz zu- und abzuschalten, wobei eine Steuereinrichtung vorgesehen ist, welche die Schalter (8) der einzelnen Batteriemodule (BM) ansteuert und dabei derart betätigt, dass maximal nur eine solche Anzahl von Batteriemodulen (BM) mit dem Bordnetz verbunden ist, dass ein vorbestimmter maximaler Kurzschlussstrom im Bordnetz nicht überschritten werden kann,
und welche derart ausgebildet ist, dass sie die einzelnen Batteriemodule (BM) dem Bordnetz in einem derartigen Wechsel zu- und abschaltet, dass die Batteriemodule (BM) im Wesentlichen gleichmäßig entladen werden und die Spannungsdifferenzen zwischen den einzelnen Batteriemodulen (BM) einen vorbestimmten Grenzwert nicht überschreiten.

2. Batterieanlage nach Anspruch 1, bei welcher zumindest zwei Schalter (8) so ausgebildet oder steuerbar sind, dass eine Verriegelung (17) vorgesehen ist, welche bewirkt, dass, wenn ein Schalter (8) geschlossen ist, zumindest ein anderer Schalter (8) nicht oder nicht dauerhaft geschlossen werden kann.

3. Batterieanlage nach Anspruch 1 oder 2, bei welcher die Steuereinrichtung so ausgebildet ist, dass sie die Schalter (8) derart betätigt, dass beim Abschalten eines Batteriemoduls (BM) und gleichzeitigem Zuschalten eines anderen Batteriemoduls (BM) zu dem Bordnetz kurzzeitig beide Batteriemodule (BM) dem Bordnetz zugeschaltet sind.

4. Batterieanlage nach einem der vorangehenden Ansprüche, bei welcher die Batteriemodule (BM) Lithiumbatterien aufweisen.

5. Batterieanlage nach einem der vorangehenden Ansprüche, bei welcher jedes Batteriemodul (BM) über eine zusätzliche Ladeleitung (20) mit einer Ladeeinrichtung (G) des Unterseebootes verbunden ist.

6. Batterieanlage nach Anspruch 5, bei welcher in der Ladeleitung (20) jedes Batteriemoduls (BM) eine Diode (24) angeordnet ist.

7. Batterieanlage nach Anspruch 5, bei welcher jedes Batteriemodul (BM) über einen Halbleiterschalter (22) schaltbar mit der Ladeleitung (26) verbunden ist.

8. Batterieanlage nach Anspruch 7, bei welcher jedes Batteriemodul (BM) eine Modulelektronik (ME) aufweist, welche zumindest eine Kenngröße (26) des zugehörigen Batteriemoduls (BM) erfasst.

9. Batterieanlage nach Anspruch 7 und 8, bei welcher die Modulelektronik (ME) derart ausgebildet ist, dass sie den Halbleiterschalter (22) in Abhängigkeit der erfassten Kenngröße (26) ein- und/oder ausschaltet, um das Batteriemodul (BM) mit der Ladeleitung (20) elektrisch zu verbinden und von dieser zu trennen.

10. Batterieanlage nach Anspruch 9, bei welcher die Betätigung des Halbleiterschalters (22) zum Trennen des Batteriemoduls (BM) von der Ladeleitung (20) durch einen Schaltbefehl einer zentralen Steuereinrichtung der Batterieanlage oder durch Änderung oder Unterbrechung des Ladestromes von der Ladeeinrichtung (G) erfolgt.

11. Batterieanlage nach einem der Ansprüche 7 bis 10, bei welcher ein zusätzlicher Notschalter zum Verbinden jedes Batteriemoduls (BM) mit der Ladeleitung (20) vorgesehen ist.

12. Verfahren zum Steuern einer Batterieanlage eines Unterseebootes nach einem der vorangehenden Ansprüche, bei welchem die Batterieanlage zumindest zwei einzelne Batteriemodule (BM) aufweist, welche jeweils die Bordnetzspannung des Unterseebootes haben, und zum Entladen der Batteriemodule (BM) abwechselnd immer nur eine solche Anzahl von Batteriemodulen (BM) dem Bordnetz zugeschaltet wird, dass ein vorbestimmter maximaler Kurzschlussstrom im Bordnetz nicht überschritten werden kann, wobei die Batteriemodule (BM) derart abwechselnd dem Bordnetz zugeschaltet und entladen werden, dass eine gleichmäßige Entladung aller Batteriemodule (BM) erreicht wird.

13. Verfahren nach Anspruch 12, bei welchem alle Batteriemodule (BM) gleichzeitig geladen werden.

14. Verfahren nach Anspruch 12 oder 13, bei welchem der Ladezustand jedes einzelnen Batteriemoduls (BM) überwacht wird und der Ladevorgang der einzelnen Batteriemodule (BM) jeweils unabhängig von den anderen Batteriemodulen (BM) gestartet und/oder beendet wird.

15. Verfahren nach Anspruch 14, bei welchem die Batteriemodule (BM) jeweils über einen Schalter (22), vorzugsweise einen Halbleiterschalter mit einer Ladeleitung (20) verbunden sind und die Schalter (22) zum Starten des Ladevorganges jeweils geschlossen werden, um das zugehörige Batteriemodul (BM) mit der Ladeleitung (20) elektrisch zu verbinden, wobei nach Erreichen der vollständigen Ladung eines Batteriemoduls (BM) der zugehörige Schalter (22) gegen ein Wiedereinschalten blockiert wird.

## Claims

1. A battery installation of a submarine with at least two battery modules (BM), which in each case have the on-board mains voltage of the submarine, and in each case are connected via a switch (8) to the on-board mains of the submarine, which permits the associated battery module (BM) to be connected to and disconnected from the on-board mains, wherein a control device is provided,
which activates the switches (8) of the individual battery modules (BM) and thereby actuates them in a manner such that maximally only such a number of battery modules (BM) is connected to the on-board mains, that a predefined maximal short-circuit current in the on-board mains may not be exceeded,
and which is designed in a manner such that it connects and disconnects the individual battery modules (BM) to and from the on-board mains in such an alternating manner, that the battery modules (BM) are discharged essentially uniformly and the voltage differences between the individual battery modules (BM) do not exceed a predefined limit value.

2. A battery installation according to claim 1, with which at least two switches (8) are designed or controllable, such that a locking (17) is provided, which has the effect that when a switch (8) is closed, at least one other switch (8) may not be closed or not be permanently closed.

3. A battery installation according to claim 1 or 2, with which the control device is designed such that it actuates the switches (8) in a manner such that on disconnecting a battery module (BM) and simultaneous connection of another battery module (BM) to the on-board mains, both battery modules (BM) are connected to the on-board mains for a short time.

4. A battery installation according to one of the preceding claims, with which the battery modules (BM) comprise lithium batteries.

5. A battery installation according to one of the preceding claims, with which each battery module (BM) is connected to a charging device (G) of the submarine via an additional charging lead (20).

6. A battery installation according to claim 5, with which a diode (24) is arranged in the charging lead (20) of each battery module (BM).

7. A battery installation according to claim 5, with which each battery module (BM) is connected to the charging lead (26) in a switchable manner via a semiconductor switch (22).

8. A battery installation according to claim 7, with which each battery module (BM) has module electronics (ME) which detect at least one characteristic value (26) of the associated battery module (BM).

9. A battery installation according to claim 7 and 8, with which the module electronics (ME) are designed in a manner such that they switch the semiconductor switch (22) on and/or off in dependence on the detected characteristic value (26), in order to electrically connect the battery module (BM) to the charging lead (20) or to disconnect it from this.

10. A battery installation according to claim 9, with which the actuation of the semiconductor switch (22) for disconnecting the battery module (BM) from the charging lead (20) is effected by a switch command of a central control device of the battery installation or by way of the change or interruption of the charging current from the charging device (G)

11. A battery installation according to one of the claims 7 to 10, with which an additional emergency switch is provided for connecting each battery module (BM) to the charging lead (20).

12. A method for controlling a battery installation of a submarine according to one of the preceding claims, with which the battery installation comprises at least two individual battery modules (BM), which in each case have the on-board mains voltage of the submarine, and for discharging the battery modules (BM), in a alternating manner, always only such a number of battery modules (BM) is connected to the on-board mains, that a predefined maximal short circuit current may not be exceeded in the on-board mains, wherein the battery modules (BM) are alternatively connected to the on-board mains and discharged, in a manner such that a uniform discharge of all battery modules (BM) is achieved.

13. A method according to claim 12, with which all battery modules (BM) are simultaneously charged.

14. A method according to claim 12 or 13, with which the charging condition of each individual battery module (BM) is monitored and the charging procedure of the individual battery modules (BM) is started and/or ended in each case independently of the other battery modules (BM).

15. A method according to claim 14, with which the battery modules (BM) are connected to a charging lead (20) in each case via a switch (22), preferably a semiconductor switch, and the switches (22) for starting the charging procedure are closed in each case, in order to electrically connect the associated battery module (BM) to the charging lead (20), wherein after reaching the complete charging of a battery module (BM), the associated switch (22) is blocked from switching on again.

## Revendications

1. Ensemble de batteries d'un sous-marin, comprenant au moins deux modules de batteries (BM) qui reçoivent chacun la tension du réseau de bord du sous-marin et sont reliés au réseau de bord du sous-marin respectivement par l'intermédiaire d'un commutateur (8) qui permet de connecter au réseau de bord et de déconnecter du réseau de bord le module de batteries (BM) associé, un dispositif de commande étant prévu,
lequel commande les commutateurs (8) des différents modules de batteries (BM) et les actionne de façon qu'au maximum n'est relié au réseau de bord qu'un nombre de modules de batteries (BM) tel qu'un courant de court-circuit maximum prédéterminé dans le réseau de bord ne peut pas être dépassé,
et est conçu de façon à connecter au réseau de bord et à déconnecter du réseau de bord les différents modules de batterie (BM) en alternant de telle sorte que les modules de batteries (BM) sont déchargés de manière sensiblement uniforme et que les différences de tension entre les différents modules de batteries (BM) ne dépassent pas une valeur limite prédéterminée.

2. Ensemble de batteries selon la revendication 1, dans lequel au moins deux commutateurs (8) sont conçus ou peuvent être commandés de telle façon qu'est prévu un verrouillage (17) qui agit de telle sorte que, lorsqu'un commutateur (8) est fermé, au moins un autre commutateur (8) ne peut pas être fermé ou ne peut l'être de façon durable.

3. Ensemble de batteries selon la revendication 1 ou 2, dans lequel
le dispositif de commande est conçu de façon à actionner les commutateurs (8) de telle sorte que, lors de la déconnexion d'un module de batteries (BM) et de la connexion simultanée d'un autre module de batteries (BM) au réseau de bord, les deux modules de batteries (BM) sont connectés au réseau de bord pendant une courte durée.

4. Ensemble de batteries selon l'une des revendications précédentes, dans lequel les modules de batteries (BM) comprennent des batteries au lithium.

5. Ensemble de batteries selon l'une des revendications précédentes, dans lequel chaque module de batteries (BM) est relié, via un câble de charge (20) supplémentaire, à un dispositif de charge (G) du sous-marin.

6. Ensemble de batteries selon la revendication 5, dans lequel une diode (24) est disposée dans le câble de charge (20) de chaque module de batteries (BM).

7. Ensemble de batteries selon la revendication 5, dans lequel chaque module de batteries (BM) est relié de manière commutable au câble de charge (26) via un commutateur à semi-conducteur (22).

8. Ensemble de batteries selon la revendication 7, dans lequel chaque module de batteries (BM) comporte une électronique modulaire (ME) qui détecte au moins une grandeur caractéristique (26) du module de batteries (BM) associé.

9. Ensemble de batteries selon les revendications 7 et 8, dans lequel l'électronique modulaire (ME) est conçue de façon à mettre en et/ou hors circuit le commutateur à semi-conducteur (22) en fonction de la grandeur caractéristique (26) détectée, pour relier électriquement le module de batteries (BM) au câble de charge (20) et l'isoler de celui-ci.

10. Ensemble de batteries selon la revendication 9, dans lequel l'activation du commutateur à semi-conducteur (22) pour isoler le module de batteries (BM) du câble de charge (20) est opérée par un ordre de commutation d'un dispositif de commande central de l'ensemble de batteries ou par modification ou interruption du courant de charge par le dispositif de charge (G).

11. Ensemble de batteries selon l'une des revendications 7 à 10, dans lequel est prévu un commutateur de secours supplémentaire pour relier chaque module de batteries (BM) au câble de charge (20).

12. Procédé de commande d'un ensemble de batteries d'un sous-marin selon l'une des revendications précédentes, dans lequel l'ensemble de batteries comprend au moins deux modules de batteries (BM) individuels qui reçoivent chacun la tension du réseau de bord du sous-marin, et dans lequel, pour la décharge des modules de batteries (BM), est toujours connecté alternativement au réseau de bord uniquement un nombre de modules de batteries (BM) tel qu'un courant de court-circuit maximum prédéterminé dans le réseau de bord ne peut pas être dépassé, les modules de batteries (BM) étant alternativement connectés au réseau de bord et déchargés de façon à obtenir une décharge uniforme de tous les modules de batterie (BM).

13. Procédé selon la revendication 12, dans lequel tous les modules de batteries (BM) sont chargés simultanément.

14. Procédé selon la revendication 12 ou 13, dans lequel l'état de charge de chaque module de batteries (BM) individuel est contrôlé et le processus de charge de chacun des modules de batteries (BM) est lancé et/ou achevé respectivement indépendamment des autres modules de batteries (BM).

15. Procédé selon la revendication 14, dans lequel les modules de batteries (BM) sont reliés, respectivement par l'intermédiaire d'un commutateur (22), de préférence un commutateur à semi-conducteur, à un câble de charge (20), et les commutateurs (22) pour le lancement du processus de charge sont respectivement fermés pour relier électriquement le module de batteries (BM) associé au câble de charge (20), le commutateur (22) correspondant étant verrouillé pour interdire sa remise en circuit lorsque la charge complète d'un module de batteries (BM) est atteinte.
